# FASCICULE DE BREVET EUROPEEN

(11) **EP 2 022 150 B1**
(45) Date de publication et mention de la délivrance du brevet: **28.10.2009**
(21) Numéro de dépôt: 07731430.0
(22) Date de dépôt: 10.05.2007
(51) Int. Cl.: H02G 3/04

(54) **DISPOSITIF DE SÉPARATION ET/OU DE RENFORT POUR CHEMIN DE CÂBLES EN FILS**
TRENNUNGS- UND/ODER VERSTÄRKUNGSVORRICHTUNG FÜR EINEN DRAHTKABELKANAL
SEPARATION AND/OR REINFORCEMENT DEVICE FOR A WIRE CABLE DUCT

(30) Priorité: 12.05.2006 FR 0604220
(43) Date de publication de la demande: 11.02.2009
(73) Titulaire: ICM Group, 21500 Montbard (FR)
(72) Inventeur: QUERTELET, Stéphane, 60190 Remy (FR); DECIRY, James, 02880 Crouy (FR)
(74) Mandataire: Santarelli
(86) Numéro de dépôt international: PCT/FR2007/000789
(87) Numéro de publication internationale: WO 2007/135264

(56) Documents cités:
- EP-A1- 0 752 745
- DE-A1- 19 726 500
- DE-U1- 9 313 607
- FR-A1- 2 613 146

## Description

La présente invention concerne un dispositif de séparation et/ou de renfort pour chemin de câbles en fils.

De manière connue, des chemins de câbles en fils se présentent sous la forme d'un canal constitué d'un maillage de fils. Ce maillage comporte d'une part des fils longitudinaux, appelés habituellement fils de chaîne, et d'autre part des fils transversaux appelés fils de trame. Les fils de chaîne sont des fils rectilignes, ou sensiblement rectilignes, et sont soudés aux fils de trame. Ces derniers présentent généralement une forme globale en U et sont disposés avec un pas régulier le long des fils de chaîne. Ainsi, un chemin de câbles comporte globalement trois panneaux, à savoir un panneau de fond et deux panneaux latéraux.

De tels chemins de câbles sont couramment utilisés pour assurer le logement, le soutien et la protection de conduites souples de diverses natures : conduites électriques (basse tension ou haute tension), câbles de transmission de données (téléphone, fibre optique, etc...), conduites de fluides, etc....

Il est parfois souhaité de séparer dans un chemin de câbles les conduites de natures différentes. On utilise alors, de manière classique, des cornières qui sont boulonnées sur le panneau de fond du chemin de câbles. Ces cornières se présentent sous la forme d'un profilé à section transversale en L. Une aile de ce L est munie par exemple d'alésages pour permettre sa fixation à l'aide de boulons sur lé panneau de fond d'un chemin de câbles en fils tandis que l'autre aile du profilé s'étend perpendiculairement à la première aile et réalise la séparation entre les diverses conduites. Il existe des variantes de réalisation permettant une fixation sans boulons des cornières sur le panneau de fond d'un chemin de câbles en fils.

Un autre problème qui se pose souvent avec des chemins de câbles destinés à recevoir des conduites de natures différentes est le poids de toutes les conduites prenant place dans le chemin de câbles. Il est alors connu d'utiliser des renforts permettant de rigidifier un chemin de câbles en fils et de limiter ainsi son fléchissement entre deux supports. On utilise alors par exemple des longerons latéraux de renfort tels ceux révélés par le document FR-2 706 973 de la Société Acroba.

Il est également connu de venir souder sur le panneau de fond d'un chemin de câbles en fils un plat s'étendant longitudinalement, parallèlement aux panneaux latéraux du chemin de câbles.

Parmi les dispositifs de l'art antérieur discutés ci-dessus, seuls les plats soudés permettent de réaliser à la fois un renfort de chemin de câbles et une séparation de conduites à l'intérieur de ce chemin de câbles. Toutefois, les chemins de câbles équipés d'un tel plat soudé sont des produits spécifiques, à acheter finis. De ce fait, il convient de prévoir avant la réalisation d'un chantier le nombre de renforts et la position de ceux-ci. Aucune liberté n'est donc laissée au monteur posant le chemin de câbles sur le chantier.

Les cornières de séparation ne permettent pas de réaliser un renfort sensible du chemin de câbles sur lequel elles sont montées. Les longerons latéraux de renfort ne permettent pas de réaliser quant à eux une séparation des conduites transportées par le chemin de câbles.

Le document DE-A-197 26 500 décrit un dispositif pour un chemin de câbles en fils comportant d'une part des fils de chaîne longitudinaux et d'autre part des fils de trames transversaux. Le dispositif représenté dans ce document comporte une paroi de séparation portée par des supports montés sur le chemin de câbles correspondant.

Le document DE-U-93 13 607 concerne quant à lui un système de séparation pour une goulotte destinée à recevoir des câbles électriques. Le dispositif de séparation se présente sous la forme d'une pièce profilée de section transversale en L.

La présente invention a alors pour but de fournir un dispositif permettant de réaliser le renfort d'un chemin de câbles et/ou la séparation des conduites qu'il contient. Ce dispositif pourra de préférence être monté rapidement, sans pièces annexes (boulons ou autres) et sans outils. Ce dispositif pourra également, avantageusement, être mis en place sur site en fonction des besoins.

Pour résoudre ces problèmes, l'invention propose un dispositif de séparation et/ou de renfort, pour chemin de câbles en fils comportant d'une part des fils de chaîne longitudinaux et d'autre part des fils de trame transversaux, se présentant sous la forme d'une pièce profilée présentant une première aile dite aile horizontale et au moins une seconde aile dite aile verticale et s'étendant sensiblement perpendiculairement à ladite première aile d'un côté de celle-ci.

Selon l'invention, ce dispositif présente en outre :
- au moins un logement longitudinal destiné à recevoir un fil de chaîne réalisé sur la face inférieure de l'aile horizontale, c'est-à-dire la face opposée à la seconde aile,
- des découpes transversales réalisées avec un pas prédéterminé correspondant au pas des fils de trame transversaux tout le long de l'aile horizontale, les découpes transversales s'étendant sur toute la largeur de l'aile horizontale et se prolongeant au niveau des ailes verticales, et
- au moins une languette s'étendant longitudinalement depuis un premier bord transversal d'une découpe de manière à laisser subsister un espace entre l'extrémité libre de ladite languette et un second bord transversal opposé au premier bord transversal.

L'aile verticale de ce dispositif peut servir de renfort et/ou de paroi de séparation dans un chemin de câbles. L'aile horizontale est quant à elle utilisée pour la fixation du dispositif sur le chemin de câbles. Le logement longitudinal est destiné à recevoir un fil de chaîne et permet de créer un premier appui pour le dispositif de renfort et/ou de séparation sur le chemin de câbles correspondant. Les languettes peuvent quant à elles venir prendre place sous un fil de trame du chemin de câbles correspondant formant ainsi un second appui pour le dispositif selon l'invention. Ce dernier est alors bien maintenu sur le panneau de fond du chemin de câbles.

Un tel dispositif présente avantageusement au niveau d'au moins une découpe transversale deux languettes s'étendant longitudinalement, une de chaque côté du logement longitudinal. De cette manière, au niveau du fil de trame correspondant, le dispositif est maintenu de manière à empêcher toute rotation autour du fil de chaîne disposé dans le logement longitudinal.

Pour réaliser un encliquetage d'un dispositif selon l'invention sur un chemin de câbles, on peut prévoir qu'au moins une languette présente dans sa face supérieure, orientée vers l'aile verticale, une gouttière transversale destinée à recevoir un fil de trame. La gouttière transversale sert alors de logement au fil de trame correspondant lorsque le dispositif de séparation et/ou de renfort est correctement positionné sur le chemin de câbles.

Pour permettre le verrouillage d'un dispositif de séparation et/ou de renfort sur un chemin de câbles, on peut prévoir qu'au moins une languette est une languette rabattable. Pour que cette languette rabattable puisse s'adapter automatiquement au diamètre du fil du chemin de câbles contre lequel elle vient se replier, cette languette présente avantageusement une zone de forme trapézoïdale. Lorsque le dispositif de séparation et/ou de renfort se présente sous la forme d'un profilé pouvant être coupé à la demande à la longueur souhaitée, il est préférable de prévoir sur chaque découpe transversale au moins une languette rabattable.

Dans une variante de réalisation préférée d'un dispositif selon l'invention, le logement longitudinal est par exemple une gouttière longitudinale réalisée dans l'aile horizontale. Cette gouttière longitudinale peut présenter une forme sensiblement cylindrique circulaire. Cette forme de réalisation est adaptée à la forme habituelle des fils de chaîne des chemins de câbles.

Dans une variante de réalisation d'un dispositif selon l'invention, celui-ci présente par exemple une section transversale en U et comporte ainsi deux ailes verticales.

Dans une autre variante de réalisation, un dispositif selon l'invention peut être tel que l'aile horizontale présente deux gouttières longitudinales.

Dans une forme de réalisation combinant ces deux variantes de réalisation, les gouttières longitudinales sont par exemple disposées à la jonction entre l'aile horizontale et les ailes verticales.

Des détails et avantages de la présente invention ressortiront mieux de la description qui suit, faite en référence aux dessins schématiques annexés sur lesquels :
La figure 1 représente un dispositif selon l'invention utilisé comme dispositif de séparation et de renfort monté dans un chemin de câbles en fils,
La figure 2 représente deux dispositifs selon l'invention montés dans un chemin de câbles en fils et utilisés comme dispositifs de renfort,
La figure 3 représente les deux dispositifs de la figure 1 utilisés également comme moyens d'éclissage,
La figure 4 montre une variante de réalisation d'un dispositif de séparation et de renfort selon l'invention,
La figure 5 est une vue schématique expliquant la coopération d'un dispositif selon l'invention avec un fil de trame d'un chemin de câbles en fils,
La figure 6 est une vue correspondant à celle de la figure 5 avec une languette en position rabattue,
La figure 7 est une vue correspondant à celle de la figure 5 dans une variante de réalisation,
La figure 8 est une vue schématique de dessus correspondant aux trois figures 5 à 7,
La figure 9 est une vue schématique montrant la coopération d'un dispositif selon l'invention avec un fil de chaîne d'un chemin de câbles en fils,
La figure 10 correspond à une vue de dessus de la figure 9,
Les figures 11 à 14 sont des exemples schématiques de la forme de la section transversale de dispositifs selon l'invention, et
Les figures 15 à 17 illustrent les exemples d'utilisation de dispositifs de séparation et/ou renfort selon l'invention.

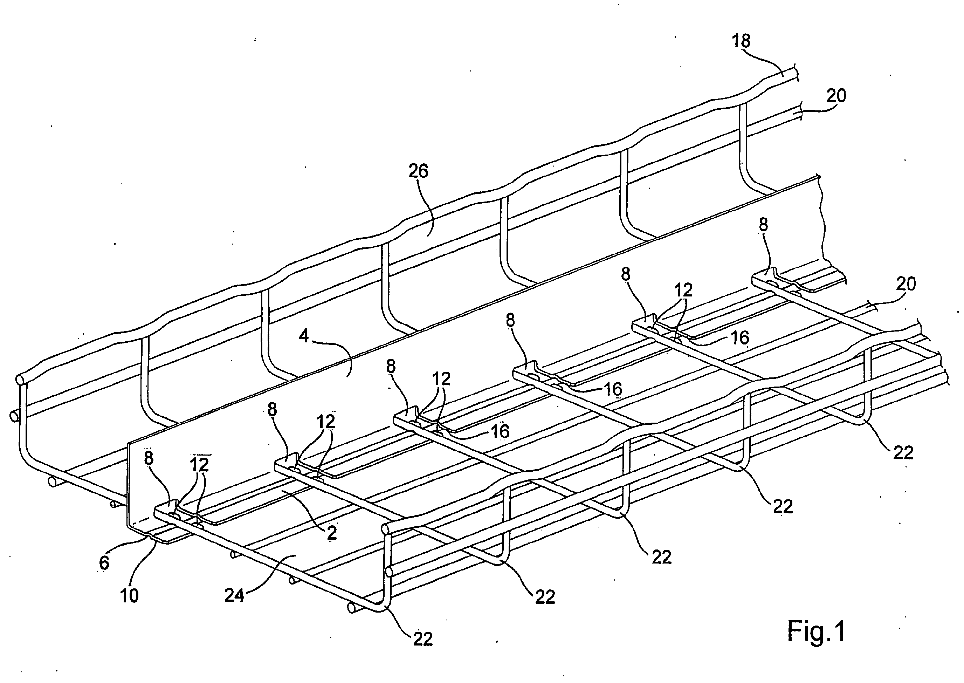

Les figures 1 à 3 représentent une première forme de réalisation d'un dispositif de renfort et/ou de séparation selon l'invention. Ce dispositif se présente sous la forme d'une pièce profilée à section transversale en L comportant une première aile dite aile horizontale 2 et une seconde aile dite aile verticale 4. Les deux ailes s'étendent perpendiculairement l'une par rapport à l'autre.

L'aile horizontale 2 présente d'une part une gouttière 6 et d'autre part des découpes 8.

Dans la suite de la description, on considère que le dispositif de séparation et/ou de renfort est orienté de la manière suivante : l'aile horizontale 2 se trouve en position basse, inférieure, tandis que l'aile verticale 4 s'étend vers le haut depuis l'aile horizontale 2.

La gouttière 6 est réalisée longitudinalement sur l'aile horizontale 2. La concavité de cette gouttière se trouve sur la face inférieure 10 de l'aile horizontale 2. Dans la forme de réalisation représentée, la gouttière 6 longitudinale est placée en position médiane par rapport à l'aile horizontale 2.

Les découpes 8 réalisées dans l'aile horizontale 2 sont des découpes transversales qui s'étendent sur toute la largeur de l'aile horizontale 2 et se prolongent légèrement dans le bas de l'aile verticale 4. Ces découpes 8 sont disposées régulièrement le long de l'aile horizontale 2.

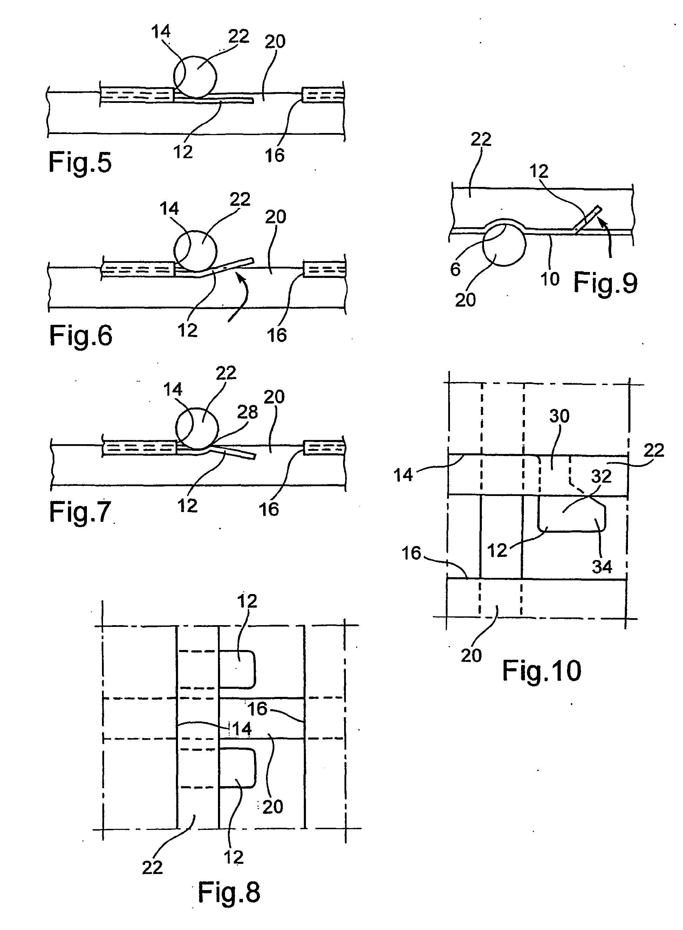

Comme représenté sur les figures 5 à 8, au moins une découpe 8 présente une languette 12 s'étendant à partir d'un bord transversal 14 d'une découpe 8. Dans la forme de réalisation représentée, chaque découpe 8 comporte deux languettes 12 s'étendant chacune à partir d'un même bord transversal 14. Les deux languettes 12 d'une même découpe 8 sont disposées de part et d'autre de la gouttière 6.

Dans une forme de réalisation, représentée sur les dessins, chaque découpe 8 présente une forme sensiblement rectangulaire. Dans la forme de réalisation de la figure 8, les languettes 12 sont également rectangulaires et s'étendent depuis un bord transversal 14 vers l'autre bord transversal opposé 16 de la découpe 8, sans toutefois atteindre ce bord transversal opposé 16.

Un tel dispositif de renfort et/ou de séparation est destiné à être monté sur un tronçon de chemin de câbles 18. De manière classique, chacun des tronçons 18 est en forme de goulotte et comporte des fils longitudinaux appelés fils de chaîne 20 et des fils transversaux appelés fils de trame 22. Les fils de chaîne 20 sont des fils rectilignes (sauf les fils de rive dans la forme de réalisation représentée qui sont toutefois sensiblement rectilignes). Les fils de trame 22 sont quant à eux en forme de U. Le tronçon de chemin de câbles 18 présente ainsi un panneau de fond 24 et deux panneaux latéraux 26. On suppose ici que le panneau de fond 24 est en position inférieure par rapport aux panneaux latéraux. Ce panneau de fond 24 est disposé dans un plan sensiblement horizontal tandis que les panneaux latéraux 26 s'étendent sensiblement verticalement. Une telle orientation est habituelle pour un tronçon de chemin de câbles. Toutefois, d'autres orientations peuvent être envisagées, avec par exemple le panneau de fond 24 disposé verticalement ou incliné.

Un dispositif de séparation et/ou de renfort selon l'invention est destiné à prendre place dans un tronçon de chemin de câbles 18. L'aile horizontale 2 du dispositif selon l'invention se trouve alors au niveau du panneau de fond 24 du tronçon de chemin de câbles 18 tandis que l'aile verticale 4 de ce dispositif s'étend parallèlement aux panneaux latéraux 26 du tronçon de chemin de câbles 18. Comme on peut le remarquer sur les figures 1 à 3 et sur la figure 9, la gouttière 6 longitudinale est destinée à recevoir un fil de chaîne 20 du tronçon de chemin de câbles 18. Cette gouttière présente par exemple une forme en arc de cercle dont le rayon de courbure correspond au fil de chaîne devant prendre place à l'intérieur de la gouttière. Si des fils de chaîne de diamètres différents sont amenés à être logés dans la gouttière 6, cette dernière aura de préférence un rayon de courbure correspondant au rayon du fil de chaîne le plus grand.

Les languettes 12 viennent prendre place sous les fils de trame 22 du tronçon de chemin de câbles 18.

Les dimensions du dispositif de séparation et/ou de renfort selon l'invention sont bien entendu adaptées aux dimensions du tronçon de chemin de câbles 18. On a déjà vu comment la gouttière 6 était adaptée au diamètre des fils de chaîne 20 du tronçon de chemin de câbles 18. Le pas entre deux découpes 8 successives correspond au pas séparant les fils de trame 22 du tronçon de chemin de câbles 18. L'espace libre entre l'extrémité libre d'une languette 12 et le bord transversal opposé 16 de la découpe 8 correspondante est suffisant pour permettre le passage d'un fil de trame 22. En outre, la hauteur de la découpe 8 dans le bas de l'aile horizontale 4 correspond sensiblement au diamètre maximal du fil de trame destiné à venir prendre place dans la découpe 8.

Pour la mise en place du dispositif de séparation et/ou de renfort selon l'invention dans un tronçon de chemin de câbles, l'aile horizontale 2 est posée sur un fil de chaîne 20 du panneau de fond 24 du tronçon de chemin de câbles 18. La gouttière 6 est disposée au-dessus du fil de chaîne 20 tandis que les découpes 8 prennent place au-dessus des fils de trame 22 de telle sorte que ces derniers se trouvent entre l'extrémité libre des languettes 12 et le bord transversal opposé 16. Le dispositif de séparation et/ou de renfort selon l'invention est alors coulissé longitudinalement de manière à venir glisser les languettes 12 sous les fils de trame 22. Au cours de ce mouvement, un guidage est réalisé grâce au fil de chaîne 20 coulissant dans la gouttière 6.

Le dispositif de séparation et/ou de renfort selon l'invention est maintenu d'une part par l'appui de la gouttière 6 sur le fil de chaîne 20 et d'autre part par l'appui des languettes 12 sous les fils de trame 22. On peut prévoir ici d'avoir un léger serrage permettant ainsi le maintien du dispositif selon l'invention sur le tronçon de chemin de câbles 18. Ce dispositif est alors maintenu grâce à ce serrage sans avoir à utiliser aucun outil.

Ce serrage est obtenu en adaptant la cote correspondant à la différence d'altitude entre la face supérieure des languettes 12 (sur lesquelles vient en appui un fil de trame) et le fond de la gouttière longitudinale 6 (dans laquelle vient se loger un fil de chaîne). En adaptant cette cote au chemin de câbles, on permet le montage du dispositif sur le chemin de câbles, et, le cas échéant, avec plus ou moins de serrage.

Les figures 5 et 6 montrent une première forme de réalisation d'une languette 12. Il s'agit ici d'une languette plane de forme rectangulaire s'étendant sensiblement dans le plan de l'aile horizontale 2. Pour venir bloquer le dispositif selon l'invention dans sa position montée, notamment lorsque ce dispositif est utilisé pour renforcer le tronçon de chemin de câbles 18, la languette 12 peut être rabattue autour du fil de trame correspondant 22 comme illustré sur la figure 6. Cette languette peut être facilement rabattue avec un tournevis venant prendre appui sur le bord transversal opposé 16 de la découpe 8 correspondante.

La forme de réalisation de la figure 7 montre une forme de réalisation dans laquelle le dispositif selon l'invention peut venir s'encliqueter sur un tronçon de chemin de câbles. La languette 12 présente ici sur sa face supérieure un bossage transversal 28 réalisé à distance du bord transversal 14 portant la languette 12. On réalise ainsi une gouttière transversale sur la languette 12, entre le bord transversal 14 et le bossage transversal 28. Lors du montage du dispositif selon l'invention sur un tronçon de chemin de câbles 18, le dispositif selon l'invention est coulissé le long du fil de chaîne 20 correspondant jusqu'à ce que les fils de trame 22 passent au-dessus des bossages transversaux 28, jusque dans la gouttière transversale.

La figure 8 illustre une forme de réalisation préférée dans laquelle une languette 12 se trouve de chaque côté de la gouttière 6. Ainsi, le dispositif de séparation et/ou de renfort est parfaitement maintenu sur le panneau de fond 24 du tronçon de chemin de câbles 18. Grâce à cette position des languettes 12, l'aile horizontale 2 et donc le dispositif selon l'invention, ne peuvent pas pivoter autour du fil de chaîne 20. En variante de réalisation, on pourrait toutefois prévoir une seule languette 12 par découpe 8. On alternerait alors de préférence, d'une découpe à l'autre, la position de la languette 12 par rapport à la gouttière 6. L'effet anti-rotation serait alors obtenu avec deux languettes 12 de deux découpes 8 successives et non plus au niveau de chaque découpe.

Les figures 9 et 10 illustrent une variante d'un moyen de verrouillage d'un dispositif selon l'invention sur un tronçon de chemin de câbles 18. La figure 9 est une coupe transversale sur laquelle on reconnaît donc la section d'un fil de chaîne 20. Sur la figure 10, une variante de réalisation d'une languette 12 est représentée. Par rapport à la forme de réalisation de la figure 8, la languette 12 est non plus rectangulaire mais présente une base 30, une zone trapézoïdale 32 et une tête 34. La base 30 est rectangulaire et est rattachée au bord transversal 14. La zone trapézoïdale 32 présente la forme d'un trapèze rectangle et est disposée de manière à élargir la languette 12 en s'éloignant du premier bord transversal 14. La tête 34 est destinée à faciliter le repliage de la languette 12. Alors que dans la forme de réalisation de la figure 6, la languette 12 était rabattue par pliage autour d'un axe transversal, la languette 12 des figures 9 et 10 est destinée à être repliée le long d'un axe longitudinal. La partie repliée de la tête 34 vient alors bloquer le fil de trame 22 en s'adaptant automatiquement au diamètre de celui-ci.

Sur la figure 1, le dispositif de séparation et/ou renfort est fixé sur un tronçon de chemin de câbles comme décrit plus haut. Il est fixé de telle sorte que l'aile verticale 4 de ce dispositif se trouve à distance des deux panneaux latéraux 26 du tronçon de chemin de câbles 18. Le dispositif selon l'invention permet donc d'assurer une séparation des conduites prenant place dans le tronçon de chemin de câbles 18. En outre, ce dispositif assure également la rigidité du tronçon de chemin de câbles 18 de par sa bonne fixation sur le panneau de fond 24 de ce tronçon de chemin de câbles 18.

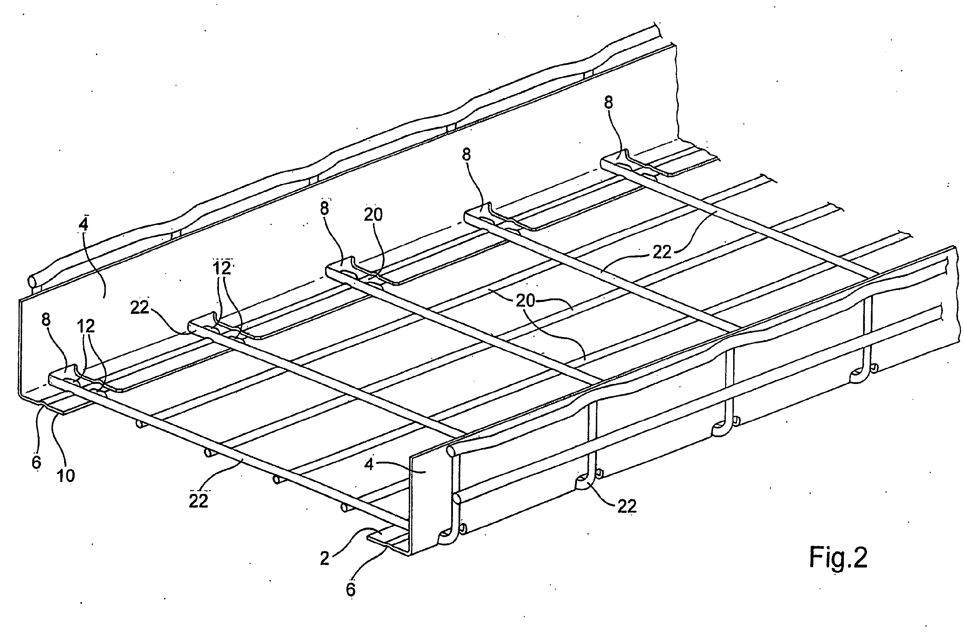

Sur la figure 2, deux dispositifs selon l'invention sont utilisés pour renforcer le tronçon de chemin de câbles 18. Ces dispositifs sont alors fixés comme décrit plus haut dans le tronçon de chemin de câbles 18 de telle sorte que les ailes verticales 4 de ces deux dispositifs selon l'invention se trouvent sensiblement contre les panneaux latéraux 26 du tronçon de chemin de câbles 18. Dans cette forme de réalisation, les dispositifs selon l'invention ne réalisent qu'un renfort du tronçon de chemin de câbles.

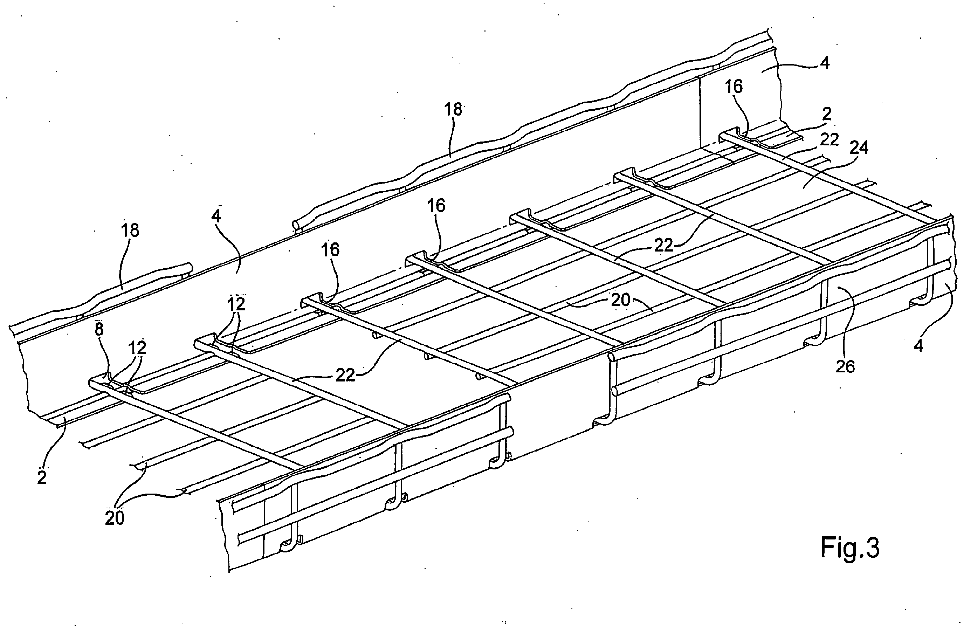

La figure 3 illustre comment un dispositif tel que décrit ci-dessus peut également servir à l'éclissage de deux tronçons de chemin de câbles 18. Un dispositif selon l'invention est monté à cheval entre deux tronçons de chemin de câbles 18. Alors qu'habituellement pour réaliser l'éclissage de tronçons de chemin de câbles, ces tronçons sont mis bout à bout, dans le cas présent, les tronçons sont disposés de telle sorte que la distance séparant deux fils de trame voisins reste constante, même en passant d'un tronçon de chemin de câbles à un autre. Un bon éclissage est obtenu avec deux dispositifs selon l'invention disposés à chaque fois de telle sorte que l'aile verticale 4 d'un dispositif se trouve sensiblement contre un panneau latéral 26 de chacun des tronçons de chemin de câbles 18. De préférence, les deux dispositifs selon l'invention utilisés pour réaliser un éclissage sont disposés avec un décalage longitudinal comme représenté sur la figure 3.

On peut remarquer dans les formes de réalisation des figures 1 à 3 qu'il est possible de prévoir deux dispositifs selon l'invention pour assurer le renfort et/ou l'éclissage dans un chemin de câbles et de prévoir en outre un troisième (voire un quatrième) pour réaliser la séparation de conduites dans les tronçons de chemin de câbles.

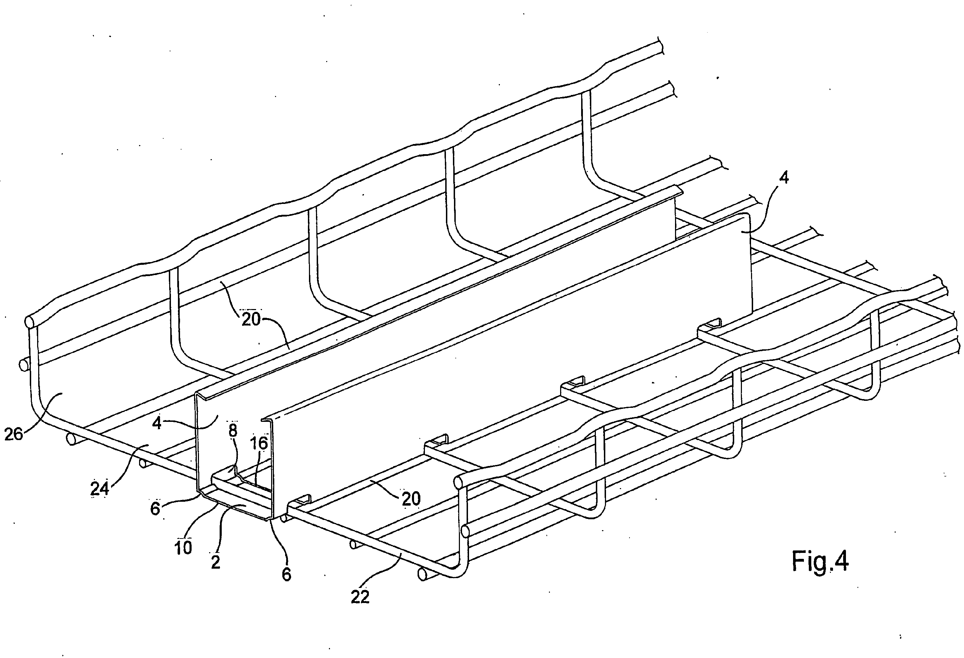

La figure 4 représente une variante de réalisation d'un dispositif selon l'invention dans lequel deux ailes verticales 4 sont prévues. En outre, ce dispositif selon l'invention est prévu pour être monté entre deux fils de chaîne 20. Les gouttières 6 sont disposées ici à chaque fois à l'intersection entre l'aile horizontale 2 et l'aile verticale 4 correspondante. Les découpes 8 s'étendent ici d'une aile verticale 4 à l'autre. On comprend ici qu'une seule languette 12 est nécessaire au niveau de chaque découpe 8. Pour un bon maintien du dispositif, on prévoit de préférence une languette de grande largeur.

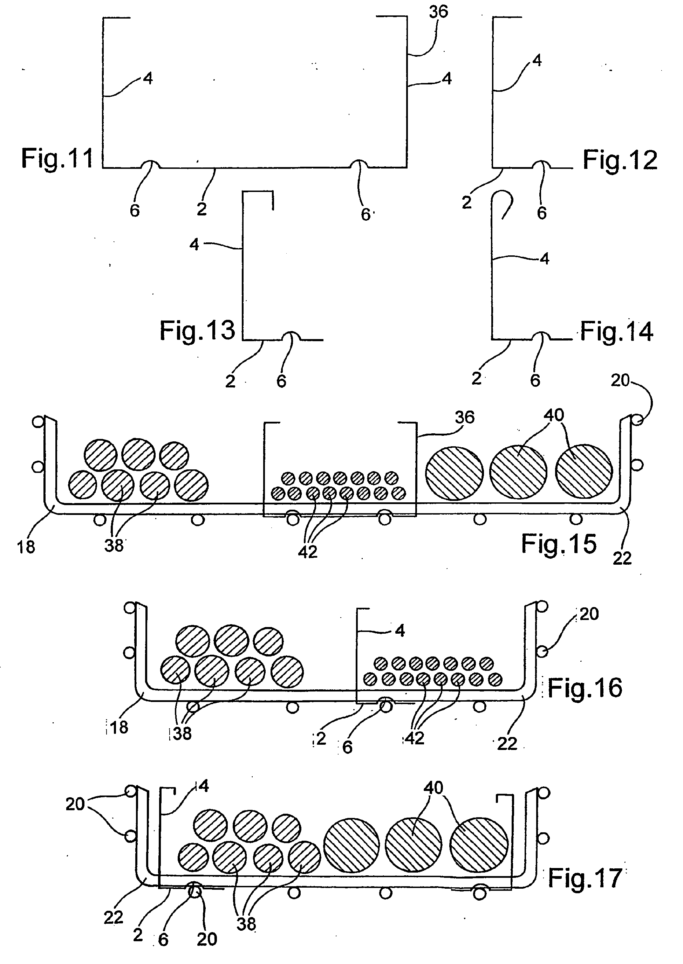

Les figures 11 à 14 illustrent à titre d'exemples non limitatifs des formes de sections transversales que peuvent prendre les profilés utilisés pour réaliser un dispositif selon l'invention. La forme de réalisation de la figure 11 prévoit deux ailes verticales 4 et deux gouttières 6 longitudinales réalisant ainsi un profilé en U. L'espacement entre les ailes verticales 4 est ici plus important que dans la forme de réalisation de la figure 4. Les gouttières 6 longitudinales sont ainsi disposées à distance des ailes verticales 4. D'autres formes en U peuvent être envisagées. On peut par exemple prévoir un profilé avec une unique gouttière longitudinale 6 dans son aile horizontale 2.

Les formes de réalisation des figures 12 à 14 reprennent sensiblement la forme de réalisation des figures 1 à 3. Ici les extrémités libres des ailes verticales 4 sont conformées de différentes manières. On peut également prévoir des emboutis, notamment dans une aile verticale, pour renforcer la cornière. On peut également prévoir, notamment dans l'aile verticale 4, des lumières, non représentées, qui peuvent alors servir pour attacher les câbles, ou similaires, et les maintenir par exemple contre l'aile verticale correspondante.

Bien entendu, de nombreux autres profilés peuvent être utilisés pour la réalisation d'un dispositif selon l'invention.

Les figures 15 à 17 illustrent des exemples d'utilisation de dispositifs selon l'invention. La figure 15 illustre ainsi l'utilisation d'une goulotte 36 telle celle représentée sur la figure 11 pour séparer dans un tronçon de chemin de câbles 18 des câbles de trois natures différentes. La goulotte 36 est montée ici en position sensiblement centrale dans le tronçon de chemin de câbles 18. On peut supposer que le tronçon de chemin de câbles 18 représenté ici conduit d'un côté de la goulotte des câbles basse tension 38 de l'autre côté de la goulotte des câbles haute tension 40 et à l'intérieur de la goulotte 36 des câbles de données 42.

La figure 16 correspond sensiblement en coupe transversale au mode de réalisation de la figure 1. Ici, une cornière de renfort et de séparation est utilisée dans un tronçon de chemin de câbles 18 pour séparer par exemple des câbles basse tension 38 de câbles de données 42. La figure 17 correspond quant à elle à la forme de réalisation de la figure 2 dans laquelle les cornières utilisées sont des cornières de renfort ne réalisant pas de séparation dans le tronçon de chemin de câbles entre des câbles basse tension 38 et des câbles haute tension 40. Toutefois, on peut, comme déjà mentionné plus haut, utiliser ici une troisième cornière, montée comme représentée sur la figure 16, pour réaliser la séparation entre les câbles basse tension 38 et les câbles haute tension 40.

Les dispositifs décrits ci-dessus peuvent être considérés comme des profilés universels pouvant servir à la fois de renfort et de dispositif de séparation. Le montage de ces dispositifs est facile et peut se réaliser sans outil. Ces profilés peuvent être découpés à la demande sur site lors du montage d'un chemin de câbles puis mis en place sans aucune pièce annexe, de style boulon.

Ces profilés peuvent être utilisés sur toute la longueur du chemin de câbles, pour réaliser par exemple la séparation entre les conduites acheminées par le chemin de câbles mais peuvent également être utilisés localement comme dispositifs de renfort et/ou d'éclissage. Un renfort local peut être bien utile lorsqu'il n'est pas possible de disposer des supports à intervalle souhaité ou bien lorsque les chemins de câbles doivent supporter localement une charge plus importante (par exemple montage d'un accessoire sur le chemin de câbles).

Comme décrit plus haut, on remarque que ce dispositif est vraiment polyvalent puisqu'il permet également, tout en servant de renfort, de réaliser un éclissage de deux tronçons de chemin de câbles.

Les dispositifs décrits ci-dessus présentent également l'avantage de pouvoir s'adapter à différents chemins de câbles en fils et peuvent être ainsi qualifiés d'universels. Un dispositif donné selon l'invention sera adapté à quasiment tous les chemins de câbles présentant un intervalle entre deux fils de trame successifs correspondant au pas des découpes du dispositif selon l'invention. Il peut également s'adapter à tous les diamètres de fils de chaîne et de fils de trame habituellement utilisés pour réaliser des chemins de câbles en fils. Bien entendu, pour les dispositifs s'adaptant sur deux fils de chaîne, il conviendra que l'écartement entre les fils de chaîne soit adapté à l'écartement des gouttières du dispositif.

Même si un dispositif selon l'invention peut être réalisé en tôle pliée et découpée, il s'agit d'un dispositif présentant une bonne précision et offrant une grande rigidité.

La présente invention ne se limite pas aux formes de réalisation décrites ci-dessus à titre d'exemples non limitatifs et aux variantes évoquées. Elle concerne également toutes les variantes à la portée de l'homme du métier dans le cadre des revendications ci-après.

## Revendications

1. Dispositif de séparation et/ou de renfort, pour chemin de câbles (18) en fils comportant d'une part des fils de chaîne (20) longitudinaux et d'autre part des fils de trame (22) transversaux, se présentant sous la forme d'une pièce profilée présentant une première aile (2) dite aile horizontale et au moins une seconde aile (4) dite aile verticale et s'étendant sensiblement perpendiculairement à ladite première aile (2) d'un côté de celle-ci,
**caractérisé en ce qu'**il présente en outre :
- au moins un logement longitudinal (6) destiné à recevoir un fil de chaîne (20) réalisé sur la face inférieure (10) de l'aile horizontale (2), c'est-à-dire la face opposée à la seconde aile,
- des découpes transversales (8) réalisées avec un pas prédéterminé correspondant au pas des fils de trame (22) transversaux tout le long de l'aile horizontale (2), les découpes transversales (8) s'étendant sur toute la largeur de l'aile horizontale (2) et se prolongeant au niveau des ailes verticales (4), et
- au moins une languette (12) s'étendant longitudinalement depuis un bord transversal (14) d'au moins une découpe (8) de manière à laisser subsister un espace entre l'extrémité libre de ladite languette et un second bord transversal (16) opposé au premier bord transversal (14).

2. Dispositif selon la revendication 1, **caractérisé en ce qu'**il présente au niveau d'au moins une découpe transversale (8) deux languettes (12) s'étendant longitudinalement, une de chaque côté du logement longitudinal (6).

3. Dispositif selon l'une des revendications 1 ou 2, **caractérisé en ce qu'**au moins une languette (12) présente dans sa face supérieure, orientée vers l'aile verticale (4), une gouttière transversale destinée à recevoir un fil de trame (22).

4. Dispositif selon l'une des revendications 1 à 3, **caractérisé en ce qu'**au moins une languette (12) est une languette rabattable.

5. Dispositif selon la revendication 4, **caractérisé en ce que** la languette rabattable (12) présente une zone de forme trapézoïdale (32).

6. Dispositif selon l'une des revendications 4 ou 5, **caractérisé en ce que** chaque découpe transversale (8) possède au moins une languette (12) rabattable.

7. Dispositif selon l'une des revendications 1 à 6, **caractérisé en ce que** le logement longitudinal est une gouttière longitudinale (6) réalisée dans l'aile horizontale (2).

8. Dispositif selon la revendication 7, **caractérisé en ce que** la gouttière longitudinale (6) présente une forme sensiblement cylindrique circulaire.

9. Dispositif selon l'une des revendications 1 à 8, **caractérisé en ce qu'**il présente une section transversale en U et comporte ainsi deux ailes verticales (4).

10. Dispositif selon l'une des revendications 1 à 9, **caractérisé en ce que** l'aile horizontale (2) présente deux gouttières longitudinales (6).

11. Dispositif selon les revendications 9 et 10, **caractérisé en ce que** les gouttières longitudinales (6) sont disposées à la jonction entre l'aile horizontale (2) et les ailes verticales (4).

## Claims

1. Separation and/or reinforcing device for wire cable ducts (18) including on the one hand longitudinal warp wires (20) and on the other hand transverse weft wires (22), taking the form of a section having a first or horizontal wing (2) and at least one second or vertical wing (4) substantially perpendicular to said first wing (2) on one side thereof,
**characterized in that** it further includes:
- at least one longitudinal housing (6) intended to receive a warp wire (20), produced on the lower face (10) of the horizontal wing (2), i.e. the face opposite the second wing,
- transverse cutouts (8) produced with a predetermined pitch corresponding to the pitch of the transverse weft wires (22) all along the horizontal wing (2), the transverse cutouts (8) extending the whole width of the horizontal wing (2) and being extended into the vertical wings (4), and
- at least one tongue (12) extending longitudinally from a transverse edge (14) of at least one cutout (8) to leave a gap between the free end of said tongue and a second transverse edge (16) opposite the first transverse edge (14).

2. Device according to claim 1, **characterized in that** it includes at at least one transverse cutout (8) two tongues (12) extending longitudinally, one on each side of the longitudinal housing (6).

3. Device according to either of claims 1 or 2, **characterized in that** at least one tongue (12) has in its upper face, oriented toward the vertical wing (4), a transverse channel intended to receive a weft wire (22).

4. Device according to any one of claims 1 to 3, **characterized in that** at least one tongue (12) is adapted to be bent.

5. Device according to claim 4, **characterized in that** the tongue (12) adapted to be bent includes an area (32) of trapezoidal shape.

6. Device according to either of claims 4 or 5, **characterized in that** each transverse cutout (8) includes at least one tongue (12) adapted to be bent.

7. Device according to any one of claims 1 to 6, **characterized in that** the longitudinal housing is a longitudinal channel (6) produced in the horizontal wing (2).

8. Device according to claim 7, **characterized in that** the longitudinal channel (6) has a substantially circular cylindrical shape.

9. Device according to any one of claims 1 to 8, **characterized in that** it has a U-shaped cross section and therefore includes two vertical wings (4).

10. Device according to any one of claims 1 to 9, **characterized in that** the horizontal wing (2) includes two longitudinal channels (6).

11. Device according to claims 9 and 10, **characterized in that** the longitudinal channels (6) are disposed at the junction between the horizontal wing (2) and the vertical wings (4).

## Patentansprüche

1. Trennungs- und/oder Verstärkungsvorrichtung für einen Drahtkabelkanal (18) mit einerseits längs verlaufenden Kettdrähten (20) und andererseits quer verlaufenden Schussdrähten (22) in Form eines Profilteils, wobei die Vorrichtung einen ersten horizontalen Flügel (2) und mindestens einen zweiten vertikalen Flügel (4), der sich im Wesentlichen senkrecht zum ersten Flügel (2) an einer Seite dieses Flügels erstreckt, aufweist,
**dadurch gekennzeichnet, dass** sie ferner aufweist:
- mindestens eine Längslagernut (6) zur Aufnahme eines Kettdrahtes (20), die auf der Innenseite (10) des horizontalen Flügels (2), das heißt auf der Seite gegenüber dem zweiten Flügel ausgebildet ist,
- transversale Ausschnitte (8) in einem vorbestimmten Abstand zueinander, der dem Abstand der transversalen Kettdrähte (22) entspricht entlang der gesamten Länge des horizontalen Flügels (2), wobei die transversalen Ausschnitte (8) sich über die gesamte Breite des horizontalen Flügels (2) erstrecken und sich am Ort der vertikalen Flügel (4) verlängern, und
- mindestens eine Zunge (12), die sich ausgehend von einem Querrand (14) mindestens eines Ausschnitts (8) so längs erstrecken, dass sie einen Raum zwischen dem freien Ende der Zunge und einem zweiten transversalen Rand (16) gegenüber dem ersten transversalen Rand (14) freilässt.

2. Vorrichtung nach Anspruch 1, **dadurch gekennzeichnet, dass** am Ort mindestens eines Querausschnitts (8) zwei Zungen (12), eine an jeder Seite der Längslagernut (6), in Längsrichtung erstrecken.

3. Vorrichtung nach einer der Ansprüche 1 oder 2, **dadurch gekennzeichnet, dass** mindestens eine Zunge (12) auf seiner oberen Fläche, die zum vertikalen Flügel (4) hin orientiert ist eine Querrinne aufweist, zur Aufnahme eines Schussdrahtes (22).

4. Vorrichtung nach einer der Ansprüche 1 bis 3, **dadurch gekennzeichnet, dass** mindestens eine Zunge (12) umbiegbar ist.

5. Vorrichtung nach Anspruch 4, **dadurch gekennzeichnet, dass** die umbiegbare Zunge (12) einen trapezförmigen Bereich (32) aufweist.

6. Vorrichtung nach einem der Ansprüche 4 oder 5, **dadurch gekennzeichnet, dass** jeder transversale Ausschnitt (8) mindestens eine umbiegbare Zunge (12) aufweist.

7. Vorrichtung nach einem der Ansprüche 1 bis 6, **dadurch gekennzeichnet, dass** die longitudinale Lagernut eine Längsrinne (6) ist, die in den horizontalen Flügel (2) eingearbeitet ist.

8. Vorrichtung nach Anspruch 7, **dadurch gekennzeichnet, dass** die Längsrinne (6) im Wesentlichen die Form eines Kreiszylinders aufweist.

9. Vorrichtung nach einem der Ansprüche 1 bis 8, **dadurch gekennzeichnet, dass** sie einen U-förmigen Querschnitt aufweist und somit zwei vertikale Flügel (4) hat.

10. Vorrichtung nach einem der Ansprüche 1 bis 9, **dadurch gekennzeichnet, dass** der horizontale Flügel (2) zwei Längsrinnen (6) aufweist.

11. Vorrichtung nach einem der Ansprüche 9 und 10, **dadurch gekennzeichnet, dass** die Längsrinnen (6) an der Verbindungsstelle zwischen dem horizontalen Flügel (2) und den vertikalen Flügeln (4) angeordnet sind.
